# EUROPÄISCHE PATENTSCHRIFT

(11) **EP 2 496 938 B1**
(45) Veröffentlichungstag und Bekanntmachung des Hinweises auf die Patenterteilung: **29.04.2020**
(21) Anmeldenummer: 10773113.5
(22) Anmeldetag: 05.11.2010
(51) Int. Cl.: G01N 30/60

(54) **AUF WAFEREBENE HERGESTELLTER CHIP FÜR FLÜSSIGCHROMATOGRAPHIE SOWIE VERFAHREN FÜR SEINE HERSTELLUNG**
WAFER-LEVEL FABRICATED CHIP FOR LIQUID CHROMATOGRAPHY AND PROCESS FOR PRODUCING THE SAME
PUCE FABRIQUÉE À L'ÉCHELLE D'UNE TRANCHE POUR CHROMATOGRAPHIE LIQUIDE ET SON PROCÉDÉ DE FABRICATION

(30) Priorität: 06.11.2009 DE 102009052234
(43) Veröffentlichungstag der Anmeldung: 12.09.2012
(73) Patentinhaber: Fraunhofer-Gesellschaft zur Förderung der angewandten Forschung e.V., 80686 München (DE)
(72) Erfinder: PIECHOTTA, Gundula, 25582 Hohenaspe (DE); QUENZER, Hans-Joachim, 25524 Itzehoe (DE)
(74) Vertreter: Strehl Schübel-Hopf & Partner
(86) Internationale Anmeldenummer: PCT/EP2010/066939
(87) Internationale Veröffentlichungsnummer: WO 2011/054938

(56) Entgegenhaltungen:
- EP-A2- 1 319 948
- WO-A1-01/53819
- WO-A1-2004/010135
- WO-A1-2004/055506
- US-A1- 2008 318 334
- US-B1- 6 207 098

## Beschreibung

Die vorliegende Erfindung betrifft miniaturisierte Trennsäulen für Chromatographiezwecke, z. B. "On-Chip-Flüssigchromatographie", die durch Herausätzen von Kanälen bzw. Vertiefungen in einem Substrat, Befüllen der Vertiefungen mit einem monolithischen Vorläufer der späteren stationären Phase und - nach dem Ausbildung von Poren in der stationären Phase - dichtendes Abdecken der gebildeten Kanalstrukturen erzeugt werden. Die mit diesen Verfahrensschritten erhältlichen Trennsäulen besitzen eine fest an der Substratwandung verankerte, selbsttragende, mit poröser stationärer Phase gefüllte dreidimensionale Struktur, deren Seitenwände teilweise vom Substrat und teilweise von der Abdeckung gebildet sind.

Die Erfindung lässt sich vorteilhaft mit flächigen Substraten ausführen, die in Form von Chips oder Wafern zur Verfügung stehen und sich mit mikromechanischen Verfahrensschritten bearbeiten, insbesondere ätzen lassen.

Die flüssigchromatographische Auftrennung von Molekülen und hierbei besonders die Hochdruckflüssigkeitschromatographie (HPLC) ist das am häufigsten angewandte Verfahren in der chemischen und biochemischen Analytik. Standardmäßig erfolgen die Analysen in großen Laborautomaten mit Trennsäulen, deren Maße üblicherweise 10-20 cm Länge und 10 mm Innendurchmesser aufweisen. Chip-basierte Miniaturisierungsansätze, die die Vorteile des geringen Probenverbrauchs und sekundenschnelle Trennleistungen aufweisen, sind im Ansatz in der Literatur beschrieben, es wurde jedoch bis heute noch keine Trennsäule gezeigt, mit der zufriedenstellende und reproduzierbare Trennleistungen erreicht wurden.

Chip-basierte Miniaturisierungsansätze für flüssig-chromatographische Anwendungen werden in der Literatur hauptsächlich auf Basis von Silizium- und/oder Glaschips beschrieben. Es wurden unterschiedliche Ansätze verfolgt, um eine Trennsäule, bestehend aus einer Kapillare oder einer geätzten Aussparung und einer ggf. darin befindlichen, porösen stationären Phase zu realisieren. Im Folgenden sind exemplarisch die unterschiedlichen beschriebenen Ansätze aufgeführt:
Einen planaren Trennkanal ohne stationäre Phase beschreiben Blom, M.T., Chmela E., Oosterbroek R.E., Tijssen R., Van den Berg A. in: On-chip hydrodynamic chromatography separation and detection of nanoparticles and biomolecules, Anal. Chem. 2003, 75, 6761-6768. Es handelt sich um einen Kanal für ein Molekültrennverfahren auf Basis hydrodynamischer Chromatographie mit einem Arbeitsdruck von 3,5 bar und einer Kanalhöhe von 1 µm und einer -breite von 0,5/1 mm. Verbundene Kanäle in monolithischen Trägerstukturen sind aus US 6,156,273, Separation columns and methods for manufacturing the improved separation column, bekannt.

Kanäle mit 2D-geätzten Strukturen (Pillar) beschreiben De Pra M., De Maische W., Desmet G., Schoenmakers P.J., Kok W. Th. in Pillar-structured microchannels for on-chip liquid chromatography: Evaluation of the permeability and separation performance, J. Sep. Sci. 2007, 30, 1453-1460. In einem Siliziumchip wird ein Kanal mit Pillars durch Hochratenätzen gebildet; der Kanal ist 50 µm breit und 100 µm tief. Es werden verschiedene Pillargeometrien und Abstände beschrieben. Die Pillarhöhe beträgt 10 µm, die Pillarbreite: +/- 5 µm. Eine poröse Außenschicht von 200 nm auf geätzten Pillars (19/5 µm) ist aus De Maische W., Clicq D., Verdoold V., Gzil P., Desmet G., Gardeniers H.: Integration of porous layers in ordered pillar arrays for liquid chromatography, Lab Chip 2007, 7, 1705-1711, bekannt. Diese wird durch zusätzliches anodisches Ätzen der Pillaraußenwände erzeugt, um die Oberfläche der Trennschicht zu erhöhen. In den Chromatographiesäulen der US 7,217,367 B2 können Pillars verwendet werden, die mit dem Material der stationären Phase beschichtet werden. Sie eignen sich für OTLC (open tubular liquid chromatography) oder PCLC (packed column chromatography systems) oder Kombinationen davon.

Siliziumchips mit porös geätzten kapillaren Trennkanälen offenbart US 7,115,422 B1. Clicq D., Tjerkstra R. W., Gardeniers J. G. E., Van den Berg A., Baron G. V., Desmet G. in Porous silicon as stationary phase for shear-driven chromatography, J. Chromatogr. 2004, 1032, 185-191 stellen Kanäle aus porös geätztem Silizium vor. Es handelt sich um Siliziumchips mit parallel angeordneten Kanälen; die Maße der Kanäle betragen: 100-500 nm Tiefe, 750 µm Breite. Zuerst werden durch übliches Ätzen durch eine SiO₂-Maske die Kanäle erzeugt; auf dem Kanalboden entsteht anschließend eine poröse Siliziumschicht durch anodisches HF-Ätzen. Durch späteren Kontakt mit Wasser dürfte sich sodann eine Siliciumoxidoberfläche bilden, die schließlich mit Dimethyloctylchlorsilan organisch funktionalisiert werden kann.

Für die Gaschromatographie werden kapillare Trennsäulen benötigt, die mit wenigen Molekülschichten beschichtet sind. Eine derartige Chromatographiesäule, die aus zwei miteinander verbundenen Glassubstraten gebildet wird, von denen eine einen eingeätzten Kanal aufweist, offenbart EP 1 319 949 A2. Die eingeätzten Kanalwände des ersten Substrats werden mit einer Beschichtung aus einer stationären Phase versehen, und zwar durch aufeinander folgendes Einfüllen jeweils entsprechender Chemikalien und Abdampfen des Lösungsmittels. In sechs Schritten kann dabei eine Alkylsiloxan-Beschichtung erreicht werden, die eine Dicke von mehr als 60 Siliciumatomen aufweist. Anschließend wird der Kanal durch Auflegen des zweiten Glassubstrats geschlossen. Ebenfalls eine Beschichtung der Kanalwände durch eine stationäre Phase offenbart US 7,314,505 B1. Zur Anbindung der Moleküle dieser Phase dienen Oniumsalze, die eine funktionelle Gruppe Z aufweisen, An diese wird ein Polysiloxan oder ein Polyethylenglycol angebunden. Die gesamte Schichtdicke betrug bei einer Beschichtung mit vinyliertem PDMS etwa 4 µm. DE 10 2004 050 569 B3 offenbart die Verwendung eines Haftvermittlers bei der Herstellung einer beschichteten GC-Trennsäule. Für viele Anwendungen der Flüssigchromatographie sind jedoch Trennsäulen prinzipiell ungeeignet, deren stationäre Phase sich nicht durch den gesamten oder zumindest annähernd den gesamten Querschnitt der Säule erstreckt.

Mit Partikeln gefüllte Trennsäulen wurden von He Q., Pang C., Tai Y.-C., Lee T.D. in Ion liquid chromatography on-a-chip with beads-packed parylene column, IEEE 2004, 0-7803-8265-X beschrieben. Die Säulen enthalten Mikro-Beads (7 µm PS-DVB Beads) zwischen Fritten gefüllt. Die Unterseiten der Säulen bestehen aus Silizium, die Oberseiten aus Parylen. Der erzielbare Arbeitsdruck liegt zwischen 250 -800 psi. Die Höhe der Säulen liegt bei 25 µm. Ocvirk G., Verpoorte E., Manz A., Widmer H.M. in Integration of a micro liquid chromatograph onto a silicon chip, Transducers 1995, the 8th international conference on solid-state sensors and actuators, and Eurosensors IX, Stockholm, Sweden, June 25-29, 1995 beschreiben Mikro-Beads (3-5 µm) zwischen Si/Glas-Si mit Fritte. Die Säule ist 300 µm breit, 100 µm tief und 20 mm lang. Ein Splitinjektor und die optischen Detektionseinrichtungen sind auf dem Chip integriert.

Ishida A., Natsume M., Kamidate T. beschreiben in Journal of Chromatography A, 1213 (2008) 209-217 einen Mikrochip aus Polystyrol mit einem mechanisch eingebrachten Loch als Säulenkanal. Auf der Oberfläche des Polystyrol-Substrats wurde mit Hilfe von Au-Abscheidung und Ätzungen ein Elektrodensystem für die amperometrische Detektion aufgebracht. Mit Hilfe von Poly(dimethylsiloxan) (PDMS) wurden Kanalstrukturen erzeugt. Als stationäre Phase dienten sphärische C18 Siliciumdioxid-Partikel.

Monolithisch erzeugte 3D-Strukturen aus Glas/Pyrex beschreibt die Arbeitsgruppe um A. Ishida, siehe Ishida A., Yoshikawa T., Natsume M., Kamidate T. in Reversed-phase liquid chromatography on a microchip with sample injector and monolithic silica column, J. Chromatogr. A 2006, 1132, 90-98. Die geätzten Kanäle weisen eine gewundene Struktur mit verengten Kurven, einer Kanalbreite von 400 µm, einer Kanaltiefe von 30 µm und einer Kanallänge von 42 cm auf. Die Kanäle sind mit einer porösen stationären Phase aus organisch modifizierten Siliciumdioxid-Partikeln gefüllt, die durch Einbringen eines Tetramethoxysilan-Sols, anschließendes Erwärmen und Trocknen und Modifizieren des entstandenen Siliciumdioxids mit Octadecyltrichlorsilan erzeugt wurden.

Puy G., Roux, R., Demesmay C., Rocca J.-L., lapichella J., Galarneau A., Brunel D. in Influence of the hydrothermal treatment on the chromatographic properties of monolithic silica capillaries for nano-liquid chromatography or capillary electrochromatography, J. Chromatogr. A 2007, 1160, 150-159 beschreiben die Herstellung von mit modifiziertem Siliciumdioxid gefüllten Glaskapillaren (Kapillaren aus "fused silica"). Die leeren Kapillaren wurden mit Natronlauge aktiviert. Nach dem Auswaschen wurden sie mit einer Mischung aus Polyethylenglycol (PEG), Harnstoff, Essigsäure und Tetramethoxysilan befüllt. Die Kapillaren wurden verschlossen und der Inhalt wurde einer Alterung unterzogen, um eine Gelierung zu bewirken. Sodann wurden durch Erhitzen der geschlossenen Kapillaren (Hydrothermalbehandlung) gezielt Mesoporen in der Füllung erzeugt, wobei der Harnstoff zu Ammoniak hydrolysiert wurde. Schließlich wurde das PEG ausgewaschen. In einem alternativen Ansatz wurde das Siliciumdioxid in den Kapillaren mit Octylketten modifiziert. Die Hydrothermalbehandlung erwies sich nur für das octylmodifizierte Siliciumdioxid als notwendig; ohne diese Behandlung sank hier die Effizienz um den Faktor 2.

Levkin P.A., Eeltink S., Stratton T.R., Brennen R., Robotti K., Yin H., Killeen K., Svec, F., Frechet J. M. J. : Monolithic porous polymer stationary phases in polyimide chips for the fast high-performance liquid chromatography separation of proteins and peptides, J. Chromatogr. 2008, 1200, 55-61 beschreiben stationäre Phasen aus einem Poly(lauryl methacrylat-co-ethylen dimethacrylat) oder Poly(styrol-co-divinylbenzol) in Polyimid-Chip-Kanälen, die Abmessungen von 200 µm x 200 µm x 6,8 cm aufweisen. Die stationären Phasen werden monolithisch, in Gegenwart von Porogenen (1,4-Butandiol oder 1-Propanol für die Methacrylatphase, 1-Decanol oder THF für die Styroldivinylbenzol-Phase) erzeugt, welche sodann mit Methanol herausgelöst werden.

Die Patentanmeldung US 2002/0166816 ist auf eine Chromatographie-Einrichtung und auf damit durchführbare Verfahren gerichtet, die mit einer Wegwerfkartusche durchgeführt werden, deren Kanäle flexibel und mit monolithischer stationärer Phase befüllt sind. Die Phase kann aus organischem, polymerem oder anorganischem Material bestehen. Als Beispiel für letzteres werden Siliciumdioxid-basierte Materialien genannt. Die Herstellung der monolithischen Phase kann laut Beschreibung innerhalb des Kanals erfolgen; alternativ kann der Monolith vorgefertigt und sodann in den Kanal eingebracht werden. Eine technische Lehre zur Herstellung des Monolithen enthält diese Druckschrift nicht.

Die voranstehenden Vorschläge weisen einen oder mehrere der folgenden Nachteile auf:
Die meisten der vorgeschlagenen Säulen müssen einzeln auf Chipebene befüllt werden. Das Einbringen einer separaten, porösen stationären Phase in die Mikrokanäle ist mechanisch schwierig, insbesondere dann, wenn die Kanäle nur noch an den Enden zugänglich sind; die Verwendung von Spritzen oder dergleichen ist dann unvermeidlich, desgleichen Ungleichmäßigkeiten in der Verteilung der stationären Phase im Kanal. Zuverlässige Messungen werden dadurch unmöglich.

Stationäre Phasen in Form von Partikeln können nur in fertige Säulen gepackt werden. Das dreidimensionale Grundgerüst ist abhängig von der Packungsdichte. Das Packen der Partikel in miniaturisierte Säulen mit hoher Dichte ist aufgrund der kleinen Säulengeometrien nur sehr schwer und mit geringer Reproduzierbarkeit möglich. Der Prozess ist sehr langwierig und erfolgt in der Regel manuell für jeden Chip einzeln, da eine Automatisierung wegen der erschwerten Zugänglichkeit für eine Vielzahl von Säulen kaum möglich ist. Auch dies steht einer zuverlässigen, reproduzierbaren Chromatographie entgegen.

Zwar gibt es einige Vorschläge im Stand der Technik, monolithische Vorläufer der späteren stationären Phasen herzustellen und anschließend mit Poren zu versehen. Diese werden jedoch in allen Fällen in bereits vorgefertigte Säulen eingebracht, so dass wiederum die oben erwähnten mechanischen Schwierigkeiten beim Befüllen auftreten. Beim Aushärten der (noch monolithischen) stationären Phasen und beim Entfernen des jeweiligen Lösungsmittels können durch Oberflächenspannungen und andere Effekte Änderungen in dem dreidimensionalen Grundgerüst auftreten, z.B. Schrumpfungen oder ungeplante und in ihrer Größe unkontrollierte Poren. Eine feste Anbindung der stationären Phasen an den Säulenwänden wird in der Regel ebenfalls nicht erreicht.

Nur im Falle von aus dem Substrat herausgeätztem, nachträglich oxidiertem Silizium als stationärer Phase ist es bisher möglich, diese Phase monolithisch und an den Kanälen chemisch bzw. mechanisch stabil verankert auszubilden. Mit Hilfe von anodischem Ätzen lässt sich jedoch nur eine sehr geringe Tiefe des "Kanals" erzielen; das Aspektverhältnis ist zu gering, man erhält ein nur schmales Band als Trennkanal. Variationen in der Säulengeometrie sind damit nicht möglich. Möglicherweise aus diesem Grund hebt US 7,115,422 B1 vor allem auf Trennkanäle ab, die gar keine nennenswerte poröse stationäre Phase besitzen, sondern in denen die Kanaloberfläche aus aufgerauhtem Silizium besteht. Außerdem wird beim Ausätzen einer stationären Phase aus einem Siliziumsubstrat mit Hilfe von anodischem Ätzen die Oberfläche dieser Phase regelmäßig zu stark mitgeätzt, so dass sie nicht mehr bündig mit der Substratoberfläche endet; der entstehende Spalt macht die Abdeckung problematisch. In US 7,115,422 B1 wird möglicherweise deshalb die Frage einer dichtenden Oberfläche vollständig ausgeklammert. Und schließlich ist die durch Ätzen erhaltene Porenoberfläche unbefriedigend gering.

Der vorliegenden Erfindung liegt die Aufgabe zugrunde, hier Abhilfe zu schaffen und ein Verfahren aufzufinden, mit dem sich auf Waferebene schnell eine Vielzahl von miniaturisierten, zuverlässig und reproduzierbar arbeitenden Chromatographiesäulen erzeugen lässt, die zumindest in einem Teil der Säule über ihren gesamten Querschnitt hinweg mit stationärer Phase befüllt sind.

In Lösung der Aufgabe wird ein Verfahren gemäß den Patentansprüchen bereitgestellt.

Mit Hilfe des erfindungsgemäßen Verfahrens lassen sich für Chromatographiezwecke geeignete, miniaturisierte "Chromatographiechips" mit jeweils einem oder mehreren Trennkanälen bereitstellen, die in beliebiger Form in das Substrat des Chips eingelassen und mit einer porösen, ein dreidimensionales Netzwerk bildenden ("monolithischen") stationären Phase befüllt sind, die chemisch oder mechanisch fest an zumindest einem Teil der Kanalwandung haftet. Die Phase besteht aus einem anorganischen oder einem organisch modifizierten anorganischen Material, ausgewählt unter Metallen, Keramiken und ggf. organisch durchgehend oder an der Oberfläche modifizierten Metall- oder Halbmetallverbindungen (als Halbmetall soll hier insbesondere Silicium erwähnt werden, als Halbmetallverbindung ggf. organisch modifizierte Kieselsäurepolykondensate, in deren Si-O-Si-Gerüst Heteroatome, z. B. Metallatome, eingebaut werden können). In Einzelfällen kann die Phase auch aus einem rein organischen Material gebildet sein, sofern dieses entweder mit freien SiOH-Gruppen auf der Substratoberfläche eine ausreichende chemische Bindung eingehen kann oder sofern die Oberfläche der Trennkanalwand organisch so modifiziert ist (z.B. durch eine Silanisierung), dass eine ausreichende chemische Bindung zwischen den organischen Gruppen der Kanalwandoberfläche und denjenigen der stationären Phase erfolgt, so dass die erforderliche mechanische Stabilität erreicht wird.

Jeder Trennkanal kann sich als Einzelkanal in beliebiger Gestaltung (sich in gerader Formlänge des Substrats erstreckend, gewunden, in Zick-Zack-Form, spiralförmig oder dergleichen) auf dem Substrat befinden, das den Chip bildet; es können aber auch mehrere solcher Trennkanäle auf einem Chip angeordnet sein. In bevorzugter Weise wird eine Vielzahl von Säulen auf einem Wafersubstrat ausgebildet, das später zu separaten Chips - jeweils mit einer oder mehreren Säulen - vereinzelt wird.

Als Substrat eignen sich alle Materialien, deren Oberfläche SiOH-Gruppen aufweisen oder solche in feuchter Luft oder sonstiger entsprechender Umgebung ausbilden können, d.h. Silizium, Glas, Keramiken sowie Glaskeramiken, insbesondere in Form von Wafern, die sich später vereinzeln lassen. Eine organische Modifizierung der Substratoberfläche kann gegebenenfalls über Si-O-Gruppen erfolgen, beispielsweise durch Umsetzung mit Silanen der Formel R¹ₐR²_{b}SiX_{4-a-b}, worin R¹ ein über Kohlenstoff an das Silicium gebundener Rest mit den Eigenschaften ist, die für die Anbindung an eine organische stationäre Phase erforderlich sind (z.B. mit einer Carbonsäuregruppe für eine Esterbindung oder mit einer Doppelbindung, die thermisch oder auf andere Weise zusammen mit vergleichbaren Doppelbindungen des organischen Materials der späteren stationären Phase polymerisiert werden kann), R² ein beliebiger sonstiger, meist organischer Rest ist, z.B. ein Alkylrest, X OH oder eine Abgangsgruppe darstellt, die eine hydrolytische Kondensation unter Ausbildung von Si-O-Si-Brücken ermöglicht, a gleich 1, 2 oder 3 ist, b gleich 0, 1 oder 2 ist und a+b maximal 3 ist. X kann beispielsweise ein Alkoxid, Chlorid oder eine andere der Gruppen sein, die aus dem Stand der Technik bekannt sind.

Die Trennkanäle werden als Ausnehmungen im Substrat ausgebildet, derart, dass das Substrat zumindest die (rückwärtige) Seitenwand und einen Teil oder alle sich daran anschließenden Seitenwandungen bildet, während ein letzter Teil der Seitenwand der Trennkanäle später, nach Einbringung der stationären Phase, von einer Abdeckung in Längsrichtung der späteren Säule gebildet wird. Das Erzeugen solcher Ausnehmungen ist Stand der Technik. Es kommen mechanische Verfahren, insbesondere aber Ätzverfahren hierfür in Frage. Die Ausnehmungen können in bekannter Weise in der sogenannten MEMS-Technologie hergestellt werden, d.h. auf Waferebene mit bei der Herstellung von mikromechanischen/mikroelektronischen Bauteilen üblichen Methoden. Hierzu zählt die Ätzung von Silizium- oder Glassubstraten mit Hilfe von Lithographie, insbesondere mit stationären (z.B. oxidischen) oder aufgelegten Masken. Die Maße der Trennsäulen können den jeweiligen Erfordernissen entsprechend in beliebiger Weise gewählt werden; häufig haben sie eine Breite von etwa 1-1000 µm, vorzugsweise etwa 1-500 µm, eine Höhe von etwa 1-1000 µm, vorzugsweise etwa 1-500 µm (bzw. einen Querschnitt von etwa 1-1000 µm², vorzugsweise etwa 1-500 µm²) und eine Länge von etwa 0,1, vorzugsweise 1 bis 100 mm. Sie können einen beliebigen z. B. runden, ovalen, trapezförmigen oder viereckigen Querschnitt haben.

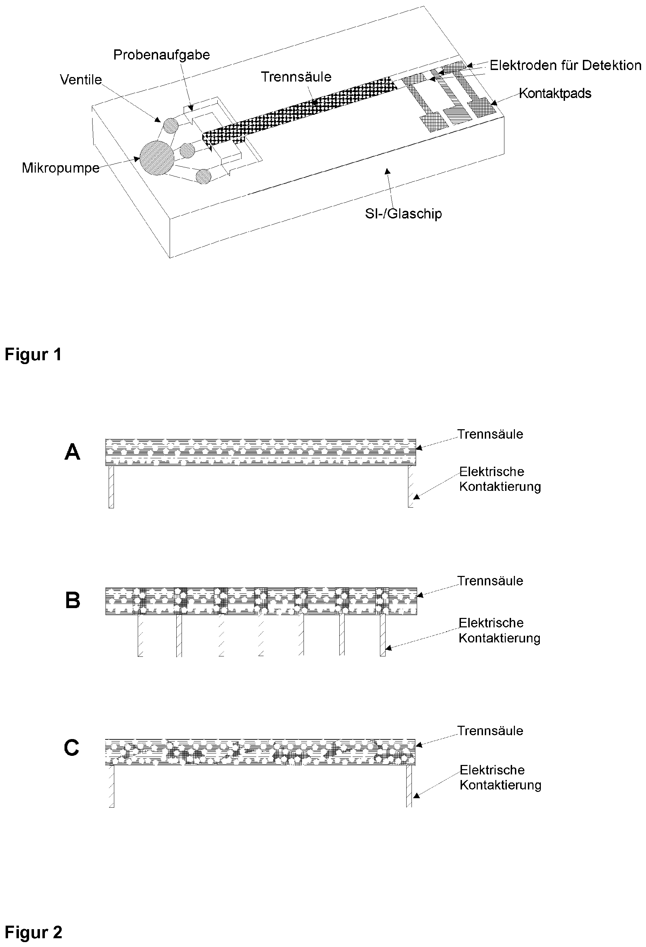

Die Ausnehmungen bzw. Kanäle werden sodann mit einem Material befüllt, bei dem es sich um ein Vorläufermaterial der späteren stationären Phase handelt, die in dem jeweils zur Anwendung gelangenden chromatographischen Verfahren verwendet werden soll. Anschließend wird das Vorläufermaterial so behandelt, dass es die genannte stationäre Phase bildet. Es soll in sich stabil sein, d.h. eine dreidimensionale Gerüststruktur besitzen, die fest (vorzugsweise chemisch und/oder physikalisch, z.B. aufgrund von Physisorption) in der Säulenwand verankert ist. Eine solche Gerüststruktur wird auch als "Monolith" bezeichnet (siehe Figur 2A). Eine stationäre Phase mit in sich stabiler Gerüststruktur unterscheidet sich von partikulären stationären Phasen dadurch, dass sie selbsttragende Eigenschaften besitzt und daher ihre Form beibehalten würde, wenn man sie unbeschädigt aus der Säule lösen und lagern könnte.

Zu diesem Zweck werden die Kanäle bis zu einer bestimmten Höhe mit einem Vorläufermaterial für die poröse Phase befüllt, das an den Kanalwänden haftet. Wenn für die Umwandlung des Vorläufermaterials in die poröse Phase keine Volumenveränderungen zu befürchten sind, liegt die Füllhöhe des Vorläufermaterials vorzugsweise flächenbündig auf der Ebene der Substratoberfläche. Andernfalls (z.B. bei einer erwarteten leichten Schrumpfung des Materials) kann ein geringfügiger Überstand vorgesehen werden, der durch geeignete Oberflächeneigenschaften (Hydrophilie, Hydrophobie) des Substrats oder des Vorläufermaterials stabilisiert sein kann, derart, dass sich nach Überführen des Materials in die poröse stationäre Phase auch dann, wenn die Kanalabdeckung in Form einer starren Platte erfolgen soll, kein Spalt bildet. Diese Vorsichtsmaßnahme ist allerdings im erfindungsgemäßen Verfahren nicht nötig, da eine konforme Abdeckung erfolgt.

Die Kanäle müssen in Längsausdehnung nicht vollständig befüllt werden. So kann es günstig sein, die an die Eintritts- oder Austrittsöffnung anschließenden Kanalbereiche frei von stationärer Phase zu halten. Im Querschnitt gesehen sollte zumindest ein Teilbereich der Kanäle vollständig oder im Wesentlichen vollständig mit der porösen Phase befüllt sein.

Anschließend an die Befüllung der Kanäle wird das Material mit den gewünschten Poren versehen (siehe Figur 2A).

In einer ersten Ausgestaltung der Erfindung kann das Material für die stationäre Phase ein Metall sein. Unter "Metall" soll erfindungsgemäß ein echtes Metall, d.h. kein Halbmetall wie Silizium verstanden werden. Das Metall wird mit der Kanalwand innig verbunden, beispielsweise mit Hilfe einer vorherigen Aktivierung des Kanalwand-Materials. Dabei kann es sich um eine Corona-Vorbehandlung oder ein leichtes Anätzen handeln. Stattdessen oder zusätzlich kann eine Primerschicht aufgebracht werden. Gegebenenfalls wird eine Startschicht (seed layer) aus demselben oder einem anderen geeigneten Metall aufgebracht, um eine galvanische Abscheidung des für die stationäre Phase vorgesehenen Metalls zu ermöglichen, z.B. durch Bedampfen. Beispiele für Metallabscheidungen sind solche aus Gold, Gold-Platin-Legierungen oder anderen goldhaltigen Legierungen. Gold als chromatographisches Material eignet sich insbesondere für die vorliegende Erfindung, weil Goldoberflächen Thiolkopplungen eingehen können. Über diese Reaktion können an der Goldoberfläche hydrophile oder hydrophobe organische Gruppen angebracht werden, die maßgeschneidert für die jeweils gewünschten chromatographische Prozesse sind bzw. die gewünschten Trenneigenschaften der resultierenden Säule definieren. Ein Beispiel hierfür ist die Modifizierung mit C₈- oder C₁₈-Kohlenstoffketten, die eine Hydrophobierung der stationären Phase bewirkt. Derart hydrophobe bzw. hydrophobierte Phasen nutzt man für "reverse phase" Chromatographie. Gegebenenfalls können mit Goldoberflächen auch sulfidhaltige Moleküle abgefangen werden, oder die Trennkanäle werden für die Chromatographie mit Fängermolekülen genutzt, die über SH-Bindungen ("self assembling") auf dem Goldgerüst gebunden werden können.

Um eine poröse, monolithische Goldphase zu erzeugen, wird vorzugsweise eine Goldlegierung mit einem weniger edlen Metall in dem Kanal abgeschieden, worauf das unedlere Metall durch Oxidation aus der Legierung herausgelöst wird, beispielsweise mit Hilfe einer starken Säure wie Salpetersäure. Ein solches Verfahren ist beispielsweise aus O.V. Shulga et al., "Preparation and Characterization of Porous Gold and Its Application as a Platform for Immobilization of Acetylcholine Esterase" in Chem. Mater. 2007, 19, 3903-3911 bekannt. Eine poröse Goldphase kann jedoch auch auf anderem Wege in dem Kanal erzeugt werden, beispielsweise durch die thermische Zersetzung von Goldoxid (Au₂O₃), die Sublimation von lod aus AuI₂-Pulver, die elektrochemische Behandlung von polykristallinem Gold oder die Auflösung von Goldchlorid in einer geeigneten Lösung, z.B. einer Dextranlösung, und das Aufheizen dieser Lösung bis auf 600-800°C, um nach Entfernen des Lösungsmittels die organischen Anteile zu entfernen und eine Reduktion und dabei Versinterung des Goldes zu bewirken. Auch diese Verfahren sind aus O.V. Shulga, a.a.O., bekannt.

Anstelle von Gold sind andere Metalle einsetzbar, beispielsweise Platin oder Aluminium, soweit diese Metalle für spezifische Zwecke gewünscht sein können. Wird Aluminium verwendet, kann die stationäre Phase bis in eine beliebige Tiefe hinein aus Aluminiumoxid bestehen, und ihre Oberfläche kann neben Sauerstoffatomen Hydroxygruppen tragen. Unabhängig von dieser Ausführungsform kann die stationäre Phase auch aus Mischungen von Gold oder einem anderen Metall/einer Legierung mit einem weiteren metallischen oder nichtmetallischen Material derart gebildet werden, dass eines der beiden Materialien die stationäre Phase in Form einer Matrix ausbildet, in die das andere Material eingebettet ist (siehe Figur 2C). Das weitere metallische oder nichtmetallische Material kann dabei ebenfalls für chromatographische Aufgaben vorgesehen sein, z.B. andere Retentionszeiten oder die Rückhaltung anderer Moleküle bewirken. Stattdessen oder zusätzlich kann es andere Aufgaben erfüllen, z.B. eine andere (z.B. geringere) elektrische Leitfähigkeit besitzen als das Gold oder andere Metall / die genannte Legierung. Alternativ sind Schichtungen (in der Länge des Kanals oder quer dazu) aus zwei oder mehr Materialien wie voranstehend erwähnt möglich. Bei der letztgenannten Ausgestaltung können die Geometrie und die Materialien so gewählt werden, dass jeweils an der Kontaktstelle eines der Materialien zum Silizium des Substrats eine elektrische Ankontaktierung vorhanden ist, über die Informationen z.B. über die Beladung dieses Materials abgegriffen werden kann (siehe Figur 2B). Als anderes Material kann beispielsweise ein ggf. organisch modifiziertes Siliciumdioxid eingesetzt werden; es ist aber auch möglich, Luft hierfür zu verwenden.

Optional kann das Gold bzw. jedes Goldkompartiment ein oder mehrere elektrische Kontakt-Zuführungen aufweisen. An das Gold kann ein Potential angelegt werden, so dass die Trennsäule zur elektrischen Bewegung (Elektrophorese) oder zur Detektion von Molekülen benutzt werden kann.

In einer weiteren Ausgestaltung der Erfindung kann das Material für die stationäre Phase ein (keramisches oder nichtkeramisches) Oxid sein. Neben Metalloxiden der Hauptgruppenmetalle und Übergangsmetalle eignen sich hier insbesondere Siliciumoxide, die ggf. organisch modifiziert sein können, oder porös geätztes Glas.

Wird ein Siliciumoxid vorgesehen, ist darauf zu achten, dass es mit Hilfe eines Verfahrens erzeugt wurde, das zuverlässig eine monolithische Struktur zur Folge hat. So sind beispielsweise Xerogele ungeeignet, während es sich bei Aerogelen um monolithische Oxid-Strukturen handelt, die für die vorliegende Erfindung gut einsetzbar sind. Diese lassen sich beispielsweise dadurch erzeugen, dass eine flüssige SiO₂-Phase in einem geeigneten Lösungsmittel in den oder die geätzten Trennkanal/-kanäle eingebracht und durch überkritisches Trocknen mit CO₂ verfestigt wird. Infolge des Verdampfens des Lösungsmittels durch den überkritischen Trocknungsprozess erhält man eine Trennsäulenstruktur mit sehr großer Oberfläche, die schwammartig eine Vielzahl von Gaseinschlüssen und -verzweigungen aufweist. Die SiO₂-Oberfläche kann in nachfolgenden Schritten durch Aufbringung organischer Schichten derart modifiziert/funktionalisiert werden, dass die Säule die gewünschten Trennaufgaben erfüllen kann. Ein Beispiel hierfür ist wiederum wie oben für Gold als stationäre Phase beschrieben die Modifizierung mit C8- oder C18-Kohlenstoffketten für z.B. reversed phase HPLC; in diesem Falle erfolgt die Modifizierung vorzugsweise durch eine Silanisierung wie aus dem Stand der Technik bekannt.

Keramiken/Metalloxide müssen nicht notwendigerweise aus Siliciumoxid aufgebaut sein oder dieses enthalten. Ein weiteres Beispiel für ein insbesondere keramisches Oxid ist beispielsweise poröses Aluminiumoxid, das durch galvanisches Abscheiden oder Electroless Plating von Aluminium und nachfolgendes, insbesondere anodisches Ätzen mit z.B. Salzsäure, Schwefelsäure oder Salpetersäure zur Erzeugung von Poren hergestellt wird. Der Kern solcher stationärer Phasen kann hier in manchen Fällen noch Aluminiummetall enthalten. Durch den Prozess erhält man Aluminiumoxid als Poren-/Säulenmatrix, welches eine gewünschte Oberfläche für eine Vielzahl von Trennaufgaben darstellt.

Poröses Glas erhält man beispielsweise durch Anwendung des sog. Vycor-Prozesses. In die im Substrat befindlichen Kanäle wird ein Glas eingebracht, das sich aus einer homogenen Masse heraus in zwei Glasphasen trennen kann, von denen die eine ein Glas mit überwiegend silikatischen Strukturen, die andere ein Glas mit überwiegend borathaltigen Strukturen ist (Vycorglas). Abhängig von der ursprünglichen Glaszusammensetzung und der Temperatur, die man für die Trennung anwendet, entsteht in den Kanälen eine stationäre Phase aus zwei sich durchdringenden Netzen der beiden Glasphasen. Durch selektives Herausätzen der einen (hier insbesondere der borathaltigen) Phase wird eine poröse Struktur erhalten, die vorwiegend aus SiO₂ besteht. Wie vorstehend zum Aerogel beschrieben, kann auch diese poröse Struktur organisch modifiziert/funktionalisiert werden.

Auch organische Polymere können erfindungsgemäß als monolithische Phase dienen. So kann z.B. analog zum Vycor-Prozess ein flüssiges Polymergemisch in den oder die Kanäle eingebracht werden, das aus mindestens zwei unterschiedlich hydrophilen/hydrophoben Polymeren oder Polymervorstufen sowie eventuell einem Emulgator und/oder anderen Hilfsstoffen besteht. Durch Aushärten (Polymerisation/Vernetzung bzw. Nachvernetzung), z.B. durch Anheben der Temperatur, durch Bestrahlung mit UV oder auf andere Weise, bilden sich zwei einander penetrierende Netzwerke der unterschiedlichen Polymere aus, von denen eines durch Wahl eines geeigneten Lösungsmittels, in dem sich nur dieses Polymer löst, ausgewaschen werden kann. Im Anschluss an diesen Prozess kann eine Funktionalisierung der porösen Kunststoffmatrix durch Anbinden von hydrophilen oder hydrophoben Gruppen an oberflächliche, reaktive Gruppen des Polymeren erfolgen. In dieser Ausführungsform sollten die Kanalwände vorzugweise mit organischen Gruppen derart modifiziert sein, dass der nach Auswaschen verbliebene, die stationäre Phase bildende Teil des Polymeren über chemische Bindungen daran verankert ist.

Nach der Herstellung der porösen stationären Phase in dem bzw. den Kanälen des Einzelsubstrats oder des Wafers werden die befüllten Kanäle in geeigneter Weise abgedeckt oder versiegelt. Dies erfolgt durch konforme, d.h. sich der Oberfläche des Kanals anschmiegende, aber nicht porenfüllende Abscheidung eines oder mehrerer Materialien auf den Kanälen, gegebenenfalls auch auf der gesamten Substratoberfläche. Hier lassen sich in günstiger Weise Abscheidungen aus der Gasphase oder galvanische Prozesse einsetzen; als Abscheidetechniken eignen sich z.B. CVD oder PECVD (chemical vapor deposition oder plasma enhanced chemical vapor deposition), aber auch Sputtertechniken. Als Materialien eignen sich Nitride oder Oxide hauptsächlich des Siliciums, aber z.B. auch des Aluminiums, Galliums oder anderer Metallkationen, weiterhin Parylene oder Metalle wie Gold, Platin, Iridium, Silber und andere. Bei Bedarf kann die Abdeckung nachträglich strukturiert, z. B. mit Löchern oder Aussparungen versehen werden. Weitere Abscheidungen können folgen, um Metallisierungen, Kontakte oder dgl. anzubringen. Die konforme Abscheidung hat den Vorteil, dass die stationäre Phase der erfindungsgemäßen Chromatographiesäule in der Regel an alle sie umgebenden Kanalwände chemisch oder physikalisch gebunden ist.

Eine nicht erfindungsgemäße Abdeckung kann dadurch erfolgen, dass die Chips /die Wafer mit einer Platte aus Glas, Silizium oder Kunststoff über anodisches Bonden, Kleben oder mittels eines anderen, zwei Komponenten fest verbindenden Verfahrens abgedeckt werden, wobei die Abdeckung zumindest im Bereich der Trennsäule in den meisten Fällen luftdicht erfolgen sollte und über die ganze Fläche, oben und unten, noch weitere Strukturierung, z.B. Löcher, Aussparungen, Metallisierung, Kontakte oder ähnliches aufweisen kann.

Die Abdeckung oder Versiegelung der Kanäle kann ggf. erfolgen, bevor die stationäre Phase modifiziert wurde, wie oben beschrieben, weil eine solche Modifikation u.a. mit Hilfe einer Lösung erfolgen kann, die durch den geschlossenen Kanal gepumpt wird. Alternativ kann die Modifizierung aber auch vorgenommen werden, bevor die Kanäle abgedeckt werden.

Sowohl das Ätzen der Kanäle, das Einbringen des Vorläufermaterials für die stationäre Phase, das Ausbilden der porösen stationären Phase als auch das Abdecken der Kanäle kann auf einem einzelnen Chip (Substrat) oder aber auf Waferebene erfolgen. Im letzteren Fall wird eine Mehrzahl von für jeweils einen einzelnen späteren Chip vorgesehenen Kanälen auf dem Wafer geätzt, befüllt und verschlossen und anschließend wird der Wafer vereinzelt. Dabei kann das vereinzelte Wafersubstrat als Chipsubstrat dienen; alternativ wird es auf ein anderes Substrat aufgeklebt oder anderweitig aufgebracht. Das jeweilige Substrat kann dann beispielsweise die oder einen Teil der Einheiten aufweisen oder aufnehmen, die nachfolgend im Zusammenhang mit dem den oder die Kanäle aufweisenden Substrat beschrieben werden.

Es ist möglich, auf dem Flüssigchromatographiechip eine oder mehrere Einheiten zur Probenaufgabe, eine oder mehrere Mikropumpen, Mikroventile und/oder eine oder mehrere Elektroden für die elektrochemische Detektion, z.B. für gepulste Voltammetrie, Impedanz oder andere, zu integrieren. Auch solche Einheiten können entweder einzeln an den einzelnen Chips angebracht werden (d.h. an dem Substrat, das den oder die Kanäle enthält, oder an einem weiteren Substrat, siehe den vorhergehenden Absatz), oder sie (oder einige von ihnen) werden mit Wafertechnologie auf dem Substrat erzeugt (z.B. durch Metallisierungen, Ätzungen oder dgl.) und befinden sich nach der Vereinzelung zusammen mit den für denselben Chip vorgesehenen Kanalstrukturen auf einem Substrat. Alternativ können die oder ein Teil der genannten Einheiten extern vorhanden sein und für den Chromatographievorgang mit dem Chip verbunden werden.

Am Chromatographiechip können optional Vorrichtungen und Kontakte zur Temperierung der Trennsäule oder des ganzen Chips und/oder ein Temperatursensor vorhanden sein. Des Weiteren können die technischen Vorraussetzungen (Ventile, Pumpe(n), Zuleitungen und eine Programmierung) integriert werden, die erforderlich sind, um Lösungsmittelgradienten über die Trennsäule zu schicken. Für die Herstellung bzw. Anordnung dieser Teile gilt das Gleiche wie für die vorgenannten Einheiten zur Probenaufgabe, Mikropumpen, -ventile und Elektroden.

Die beschriebenen Chips für die flüssigchromatographischen Trennungen und Nachweise von unterschiedlichsten chemischen und biochemischen Molekülen zeichnen sich aufgrund der o.g. Materialien und der Herstellungsprozesse durch hohe Robustheit und Reproduzierbarkeit aus. Ein aufwändiges Packen der Säulen, welches schlechte Reproduzierbarkeit und Trennleistungen zur Folge haben kann, entfällt. Durch die Miniaturisierung auf Chiplevel kann die Flüssigchromatographie zu einer portablen und flexiblen Vor-Ort Analytik ausgebaut werden. Die Trenn- und Analysezeiten werden wenige Sekunden betragen.

Die vorgeschlagenen Materialien haben Eigenschaften, die mehrere Vorteile für flüssigchromatographische Anwendungen beinhalten.
- Große mechanische Stabilität, die besonders für die Hochdruckflüssigkeitschromatographie von essentieller Bedeutung ist;
- Siliciumdioxid ist ein Standard-Säulenmaterial, so dass hier alle vorhandenen Beschichtung-/Funktionalisierungsmaterialien für die klassischen Säulen übernommen werden können;
- Aluminiumdioxid ist ebenfalls ein Standardmaterial für eine Vielzahl von Trennungen;
- Gold hat den Vorteil, dass hier eventuell auch ein Potential angelegt werden kann und die Säule zur elektrischen Fortbewegung oder Detektion von Molekülen genutzt werden kann;
- es ist eine große Oberflächen-Bandbreite zwischen hydrophil bis hydrophob einstellbar, so dass ein sehr großes Analytenspektrum bearbeitet werden kann;
- alle Prozesse sind kompatibel für Si-Technologie (6/8 zoll Waferlevel), d.h. kostengünstige und reproduzierbare Produktion bei großer Stückzahl.

Flüssigchromatographische Trennungen gehören zu den am häufigsten verwendeten Methoden in der chemischen und biochemischen Analytik. Mit den beschriebenen Verfahren zur Integration der stationären Phase/Trennsäule in einen Chip zur Miniaturisierung der Chromatographie und zur Realisierung der On-Chip-Chromatographie öffnet sich ein fast uneingeschränktes Feld für Applikationen. Dazu gehören z.B. Anwendungen in der Lebensmittelanalytik und der Vor-Ort-Analytik (z.B. Antibiotika in Milch, Mykotoxine in Obst und Getreide, Lebensmittelinhaltsstoffe, Zusatzstoffe, Hormone, pharmakologische Stoffe, Allergene, allgemeine Wareneingangskontrolle etc.). Weitere Anwendungsgebiete sind z.B. die Detektion von Sprengstoffen oder Drogen sowie die Aufreinigung und Analytik in der Biochemie von z.B. Peptiden, Nukleotiden, Proteinen, insbesondere wenn nur kleine und/oder kostbare Probenmengen zur Verfügung stehen.

Nachstehend soll die Erfindung anhand von Ausführungsbeispielen näher erläutert werden.

### Beispiel 1 (Referenzbeispiel)

### Herstellung eines Aerogels als stationäre Phase

In die geätzte oder gesägte Aussparung eines Siliziumwafers wurde eine zähflüssige Lösung gerakelt, die wie folgt hergestellt worden war:
1 ml TEOS (Tetraethoxysilan), 5 ml Ethanol (99 %ig) und 3,5 ml 0,01 M Oxalsäure werden in ein Becherglas pipettiert. Das Glas wird mit Parafilm abgedeckt, und die Mischung wird 24 h bei Raumtemperatur auf dem Magnetrührer gerührt. Dann werden 3,5 ml 0,5 M Ammoniumhydroxidlösung zugeben, die Mischung wird (mit Parafilm abgedeckt) weitere 3 h bei 45 °C auf dem Magnetrührer gerührt und sodann 24 h bei Raumtemperatur stehen gelassen.

Nach dem Einbringen in die Aussparung ließ man die zähflüssige Lösung weitere 24 h bei Raumtemperatur im geschlossenen Waferbehälter weiter gelieren. Anschließend wurde der Wafer in ein Gerät zum überkritischen Trocknen (Automegasamdri der Fa. Tousimis) gegeben. Die Purge-Zeit für das CO₂ betrug 45 min.

### Beispiel 2 (Referenzbeispiel)

### Herstellung eines Aerogels als stationäre Phase

1 ml TMOS (Tetramethoxysilan), 0,5 ml Methanol, 1 ml Oxalsäure (0,001 M) werden in ein verschließbares Plastikgefäß (5 ml Röhrchen) gegeben und 30 min. bei Raumtemperatur langsam geschwenkt (Hydrolyse des TMOS). Sodann werden 0,5 ml Ammoniumhydroxidlösung (0,5 M) zugegeben.

Die Lösung wird zur Vermeidung von Luftblasen vorsichtig gerührt und anschließend in die Trennkanal-Aussparung(en) eines Wafers gegossen. Man lässt sie ca. 30 min. lang gelieren und weitere 48 h bei RT durchhärten. In dieser Zeit muss durch luftdichtes Abdecken sichergestellt sein, dass die Geloberfläche nicht austrocknet.

Das Gel wird mit Aceton (mind. 10-faches Volumen des Gels) überschichtet, um das im Gel befindliche Wasser/Methanol-Gemisch gegen Aceton auszutauschen (Diffusionsprozess). Den Acetonüberstand wird nach ca. jeweils 5 h mindestens drei Mal frisch ersetzt, um einen vollständigen Lösungsmittelaustausch zu erzielen.

Für den abschließenden Trennsäulen-Herstellungsprozess erfolgt die (volumenerhaltende) Trocknung des Gels mittels überkritischem CO₂.
Dafür wird der Wafer in den "Critical Point Dryer" (Automegasamdri-915B (CPD MEMS Dryer) der Fa. Tousimis) gegeben und dessen Trocknungsprogramm unterworfen (CO₂ Purge-Zeit: 45 min.).

### Beispiel 3 (Referenzbeispiel)

### Poröses Gold als stationäre Phase

Ein Siliziumwafer wurde lithographisch strukturiert, so dass Kanäle und Kontaktflächen entstanden. Die Strukturierung erfolgte in Kombination mit Hochratenätzen (ergibt gerade Ätzkanten) oder Nassätzen (anisotrop = schräge Ätzkanten) des Siliziumwafers mit KOH (30 % Kaliumhydroxidlösung bei 80 °C) bzw. TMAH (25 % Tetramethylammoniumhydroxid bei 80 °C). Anschließend wurden der Kanalboden und die Kontaktierungsfläche mit einer Galvanikstartschicht (Gold) bedampft.

Zum Kontaktieren der Goldebene wurde der kontaktierte Wafer als Kathode und eine platinierte Elektrode als Anode in einen auf 50 °C erwärmten und gerührten Elektrolyten, bestehend aus z.B. 0,15 mol/l Goldsulfit, 0,06 mol/l Palladiumsulfit und 0,5 mol/l Natriumsulfit, mit einer Stromdichte von 0,4-0,5 A/dm² zur Abscheidung der Gold-Palladiumlegierung gegeben.
Anstatt Palladium können auch Silber-, Kupfer-, Nickel-, Zink-, Arsen-, Wismutsulfit oder andere unedle Metallsulfitionen zur galvanischen Abscheidung vorgelegt werden. Anstelle von Sulfitionen können die Metalle auch mit Cyaniden als Anionen eingesetzt werden.

Die Stromdichten für die Abscheidung des Goldes werden je nach gewählten Ausgangsmaterialien gewählt. Generell liegen sie im Bereich zwischen ca. 0,05-1 A/dm² bei Gleich- oder Pulsstrom.

Die Zugabe von Hilfsstoffen wie EDTA oder Ethylendiamin etc. ist möglich.

Das Ätzen des unedleren Metalls aus der abgeschiedenen Schicht erfolgt mit 50 %iger Salpetersäure. Die Zeitdauer hängt von der Schichtdicke und dem prozentialen Gehalt des unedlen Metalls ab und beträgt in der Regel etwa zwischen 10 und 48 Stunden.

### Beispiel 4

### Abdeckung des Substrats nach Ausbilden der stationären Phase

Die nach den Beispielen 1 bis 3 behandelten Wafer werden in einen PECVD-Ofen eingebracht. Bei 250-450°C wird eine 2 µm dicke Siliciumnitridschicht abgeschieden, die die gesamten Waferoberflächen abdeckt und damit den Kanal konform und flüssigkeitsdicht schließt.

## Patentansprüche

1. Verfahren zum Herstellen einer miniaturisierten Trennsäule für Chromatographiezwecke mit in der Säule verankerter poröser, monolithischer stationärer Phase, umfassend die folgenden Schritte:
(a) Bereitstellen eines flächigen Substrats aus Silizium, Glas, Glaskeramik oder Keramik,
(b) Ätzen mindestens einer Kanalstruktur in das flächige Substrat,
(c) Einbringen eines nicht porösen Vorläufermaterials für die poröse stationäre Phase in zumindest einen Teil der Kanalstruktur(en) und
(d) Ausbilden eines porösen, dreidimensionalen Netzwerks aus dem Vorläufermaterial,
**dadurch gekennzeichnet, dass** in einem Schritt (e) nach Schritt (d) flüssigkeitsdichtes Abdecken der Kanalstruktur(en) auf der Oberseite des flächigen Substrats durch konformes Abscheiden aus der Gasphase erfolgt.

2. Verfahren nach Anspruch 1, worin das flächige Substrat ein Wafer ist und worin mehrere Kanalstrukturen in dieses Substrat geätzt werden.

3. Verfahren nach Anspruch 2, worin der Wafer nach dem flüssigkeitsdichten Abdecken gemäß Schritt (e) in einzelne Bauelemente oder Chips zerteilt, insbesondere gesägt wird.

4. Verfahren nach einem der voranstehenden Ansprüche, worin das nicht-poröse Vorläufermaterial ausgewählt wird unter Metallen, insbesondere Gold oder Aluminium, Oxiden, insbesondere Silicium- oder Aluminiumoxid, und Glas.

5. Verfahren nach einem der voranstehenden Ansprüche, worin das poröse dreidimensionale Netzwerk mit organischen Gruppen modifiziert wird.

6. Verfahren nach Anspruch 5, worin das Modifizieren vor oder nach dem Abdecken der Kanalstruktur(en) erfolgt.

7. Miniaturisierte Trennsäule für Chromatographiezwecke, deren seitliche Wände gebildet sind von
- einer oder mehreren sich in der Fläche eines flächigen Silizium-, Glas-, Glaskeramik- oder Keramiksubstrats erstreckenden Ausnehmungen und
- einer oder mehreren durch konformes Abscheiden aus der Gasphase erhaltenen flüssigkeitsdichten Abdeckungen der genannten Ausnehmung(en),
und
die mit einer porösen, ein dreidimensionales Netzwerk bildenden stationären, chemisch oder physikalisch an zumindest einen Teilbereich der Säulenwände angebundenen Phase befüllt ist, die aus einem anorganischen oder einem organisch modifizierten anorganischen oder einem organischen Material besteht, ausgewählt unter Metallen, Keramiken, ggf. organisch modifizierten Oxiden sowie organischen Polymeren, mit der Maßgabe, dass die stationäre Phase dann, wenn sie aus einem organischen Material besteht, über chemische Bindungen an den Wänden der Trennsäule verankert ist.

8. Trennsäule nach Anspruch 7, **dadurch gekennzeichnet, dass** die stationäre Phase aus Gold, Aluminium, Siliciumdioxid, Aluminiumoxid, einem Silicatglas oder einer Kombination dieser Materialien gebildet ist.

9. Trennsäule nach Anspruch 8, **dadurch gekennzeichnet, dass** die Oberfläche der stationären Phase hydrophobiert ist.

10. Wafer mit einer Mehrzahl von miniaturisierten Trennkanälen, die so angeordnet sind, dass sich bei einem Zerteilen des Wafers mehrere Substrate mit jeweils einer oder mehreren miniaturisierten, mit stationärer Phase befüllten Trennsäulen gemäß einem der Ansprüche 7 bis 9 ergeben.

11. Wafer nach Anspruch 10, enthaltend weiterhin eine Mehrzahl von Elementen,
ausgewählt unter Einheiten zur Probenaufgabe, Mikropumpen, Mikroventilen, Elektroden für die elektrochemische Detektion, Vorrichtungen und Kontakten zur Temperierung der Trennkanäle, Temperatursensoren, elektrischen Kontakten, Flüssigkeitszu- und ableitungen, elektronischen Programmierelementen zur Durchführung von Chromatographie mit Lösungsmittelgradienten und Datenspeichern.

12. Chip mit mindestens einer miniaturisierten Trennsäule nach einem der Ansprüche 7 bis 9 sowie einem oder mehreren Elementen, ausgewählt unter Einheiten zur Probenaufgabe, Mikropumpen, Mikroventilen, Elektroden für die elektrochemische Detektion, Vorrichtungen und Kontakten zur Temperierung der Trennkanäle oder des gesamten Chips, Temperatursensoren, elektrischen Kontakten, Flüssigkeitszu- und ableitungen, elektronischen Programmierelementen zur Durchführung von Chromatographie mit Lösungsmittelgradienten und Datenspeichern.

## Claims

1. A process for preparing a miniaturised separation column for chromatography purposes with a porous monolithic stationary phase anchored in the column, comprising the following steps:
(a) providing a flat substrate of silicon, glass, glass-ceramic or ceramic,
(b) etching at least one channel structure into the flat substrate,
(c) introducing a non-porous stationary phase porous precursor material into at least part of the channel structure(s); and
(d) forming a porous, three-dimensional network from the precursor material,
**characterised in that** liquid-tight covering of the channel structure(s) on the upper side of the flat substrate is effected by conformal deposition from the gas phase in a step (e) after step (d).

2. The process according to claim 1, wherein the flat substrate is a wafer and wherein multiple channel structures are etched into said substrate.

3. The process according to claim 2, wherein the wafer is divided into individual components or chips, in particular sawn, after the liquid-tight covering according to step (e).

4. The process according to any of the foregoing claims, wherein the non-porous precursor material is selected from metals, especially gold or aluminium, oxides, especially silicon or aluminium oxide, and glass.

5. The process according to any of the foregoing claims, wherein the porous three-dimensional network is modified with organic groups.

6. The process according to claim 5, wherein the modification is made before or after covering the channel structure(s).

7. A miniaturised separation column for chromatography purposes, the lateral walls of which are formed by
- one or more recesses extending in the surface of a flat substrate of silicon, glass, glass-ceramic or ceramic and
- one or more liquid-tight covers of the said recess(es) obtained by conformal deposition from the gas phase,
and which is filled with a porous stationary phase which forms a three-dimensional network and is chemically or physically bonded to at least a partial region of the column walls and which consists of an inorganic or an organically modified inorganic or an organic material selected from metals, ceramics, optionally organically modified oxides and organic polymers, with the proviso that the stationary phase, if it consists of an organic material, is anchored to the walls of the separation column via chemical bonds.

8. The separation column according to claim 7, **characterized in that** the stationary phase is formed from gold, aluminium, silica, alumina, a silicate glass or a combination of these materials.

9. The separation column according to claim 8, **characterized in that** the surface of the stationary phase is hydrophobicized.

10. A wafer having a plurality of miniaturized separation channels arranged such that when the wafer is sliced, multiple substrates each having one or more miniaturized separation columns filled with stationary phase according to any one of claims 7 to 9 are obtained.

11. A wafer according to claim 10, further containing a plurality of elements selected from units for sample application, micropumps, microvalves, electrodes for electrochemical detection, devices and contacts for tempering the separation channels, temperature sensors, electrical contacts, liquid supply and discharge lines, electronic programming elements for performing chromatography with solvent gradients and data memories.

12. A chip having at least one miniaturized separation column according to one of claims 7 to 9 and one or more elements selected from units for sample application, micropumps, microvalves, electrodes for electrochemical detection, devices and contacts for tempering the separation channels or the entire chip, temperature sensors, electrical contacts, liquid supply and discharge lines, electronic programming elements for carrying out chromatography with solvent gradients and data memories.

## Revendications

1. Procédé de fabrication d'une colonne de séparation miniaturisée destinée à des opérations de chromatographie avec une phase stationnaire monolithique poreuse ancrée dans la colonne, comprenant les étapes suivantes:
(a) préparer un substrat plat en silicium, en verre, en vitrocéramique ou en céramique,
(b) graver au moins une structure de canal dans le substrat plat,
(c) introduire un matériau précurseur non poreux pour la phase stationnaire poreuse dans au moins une partie de la /des structure(s) de canal, et
(d) former un réseau poreux tridimensionnel à partir du matériau précurseur,
**caractérisé en ce que**, dans une étape (e) qui suit l'étape (d), on opère un recouvrement étanche au liquide de la/des structure(s) de canal sur la face supérieure du substrat plat par précipitation conforme à partir de la phase gazeuse.

2. Procédé selon la revendication 1, dans lequel le substrat plat est une tranche et dans lequel on grave plusieurs structures de canal dans ce substrat.

3. Procédé selon la revendication 2, dans lequel on divise, en particulier on scie, la tranche en plusieurs éléments de construction ou puces après le recouvrement étanche au liquide selon l'étape (e).

4. Procédé selon l'une quelconque des revendications précédentes, dans lequel on sélectionne le matériau précurseur non poreux parmi des métaux, en particulier l'or ou l'aluminium, des oxydes, en particulier l'oxyde de silicium ou l'oxyde d'aluminium, et le verre.

5. Procédé selon l'une quelconque des revendications précédentes, dans lequel on modifie le réseau poreux tridimensionnel avec des groupes organiques.

6. Procédé selon la revendication 5, dans lequel on effectue la modification avant ou après le recouvrement de la/des structure(s) de canal.

7. Colonne de séparation miniaturisée destinée à des opérations de chromatographie, dont les parois latérales sont formées par
- un ou plusieurs évidements s'étendant dans la surface d'un substrat plat en silicium, en verre, en vitrocéramique ou en céramique, et par
- un ou plusieurs recouvrement(s) étanche(s) au liquide dudit/desdits évidement(s) obtenu(s) par précipitation conforme à partir de la phase gazeuse,
et
qui est remplie avec une phase poreuse stationnaire, formant un réseau tridimensionnel, liée chimiquement ou physiquement à au moins une zone partielle des parois de la colonne, qui se compose d'un matériau inorganique ou d'un matériau inorganique organiquement modifié ou d'un matériau organique sélectionné parmi des métaux, des céramiques, des oxydes éventuellement modifiés organiquement ainsi que des polymères organiques, à la condition que la phase stationnaire soit, lorsqu'elle se compose d'un matériau organique, ancrée aux parois de la colonne de séparation par des liaisons chimiques.

8. Colonne de séparation selon la revendication 7, **caractérisée en ce que** la phase stationnaire est formée d'or, d'aluminium, de dioxyde de silicium, d'oxyde d'aluminium, d'un verre au silicate ou d'une combinaison de ces matériaux.

9. Colonne de séparation selon la revendication 8, **caractérisée en ce que** la surface de la phase stationnaire est rendue hydrophobe.

10. Tranche comportant une multiplicité de canaux de séparation miniaturisés, qui sont disposés de telle manière que, lors d'une division de la tranche, il se forme plusieurs substrats présentant chacun une ou plusieurs colonne(s) de séparation miniaturisée(s) selon une des revendications 7 à 9, remplie(s) de phase stationnaire.

11. Tranche selon la revendication 10, contenant en outre une multiplicité d'éléments, sélectionnés parmi des unités de création de sonde, des micro-pompes, des micro-soupapes, des électrodes pour la détection électrochimique, des dispositifs et des contacts pour la mise à température des canaux de séparation, des capteurs de température, des contacts électriques, des conduites d'arrivée et de départ de liquide, des éléments électroniques programmables pour l'exécution de la chromatographie avec des gradients de solvant et des mémoires de données.

12. Puce avec au moins une colonne de séparation miniaturisée selon une des revendications 7 à 9 ainsi qu'avec un ou plusieurs élément(s) sélectionné(s) parmi des unités pour la création de sonde, des micro-pompes, des micro-soupapes, des électrodes pour la détection électrochimique, des dispositifs et des contacts pour la mise à température des canaux de séparation ou de toute la puce, des capteurs de température, des contacts électriques, des conduites d'arrivée et de départ de liquide, des éléments électroniques programmables pour l'exécution de la chromatographie avec des gradients de solvant et des mémoires de données.
